# EUROPEAN PATENT APPLICATION

(11) **EP 4 715 245 A1**
(43) Date of publication of application: **25.03.2026**
(21) Application number: 24835078.7
(22) Date of filing: 19.03.2024
(51) Int. Cl.: F16K 11/22, F16K 11/085, F16K 31/53, H01M 10/615

(54) **MULTI-WAY VALVE, THERMAL MANAGEMENT APPARATUS, ENERGY STORAGE DEVICE, AND VEHICLE**

(30) Priority: 03.07.2023 CN 202310807980
(71) Applicant: Huawei Digital Power Technologies Co., Ltd., Shenzhen, Guangdong 518043 (CN)
(72) Inventor: WONG, Ming Fung, Shenzhen, Guangdong 518043 (CN); QIU, Yongqi, Shenzhen, Guangdong 518043 (CN); LU, Linfeng, Shenzhen, Guangdong 518043 (CN)
(74) Representative: Isarpatent
(86) International application number: PCT/CN2024/082504
(87) International publication number: WO 2025/007591

(57) **Abstract**

This application provides a multi-way valve, a heat management apparatus, an energy storage device, and a vehicle, and relates to the field of energy technologies, to resolve an existing problem such as a complex multi-way valve structure. The multi-way valve may include a housing, at least two valve cores, a transmission assembly, and a driver assembly. There is a cavity inside the housing. The at least two valve cores are rotatably disposed in the cavity and sequentially disposed in an axial direction. The transmission assembly is connected to the at least two valve cores. The driver assembly is disposed at a first end of the housing and is connected to the transmission assembly. The driver assembly is configured to drive, by using the transmission assembly, each valve core to rotate. The plurality of valve cores are sequentially disposed in the axial direction, and no radial size of the multi-way valve is additionally increased, to help implement a miniaturization design of the multi-way valve. The driver assembly may drive, by using the transmission assembly, each valve core to rotate, so that mutual interference between different valve cores can be avoided. When a connection state or a disconnection state between different interfaces needs to be switched, flexibility and reliability are good.

## Description

### CROSS-REFERENCE TO RELATED APPLICATIONS

This application claims priority to Chinese Patent Application No. 202310807980.5, filed with the China National Intellectual Property Administration on July 3, 2023 and entitled "MULTI-WAY VALVE, HEAT MANAGEMENT APPARATUS, ENERGY STORAGE DEVICE, AND VEHICLE", which is incorporated herein by reference in its entirety.

### TECHNICAL FIELD

This application relates to the field of energy technologies, and in particular, to a multi-way valve, a heat management apparatus, an energy storage device, and a vehicle.

### BACKGROUND

With continuous development and application of new energy vehicles and energy storage technologies, a quantity and complexity of pipelines in a heat management apparatus have also improved significantly. For example, a new energy vehicle is used as an example. The vehicle may include a battery pack, a motor, a heat management apparatus, and the like. The battery pack may supply electric energy to the motor, and the motor in operation may drive a wheel to rotate, to implement a traveling function of the vehicle. The heat management apparatus may cool or heat the battery pack and the motor, so that the battery pack and the motor are in normal temperature ranges. In addition, the heat management apparatus may further effectively adjust and control a temperature of a passenger compartment, to meet a cooling or heat supply requirement of a user. In actual application, the heat management apparatus may effectively adjust and control heat of the battery pack, the motor, and the passenger compartment by using a pipeline. The pipeline is equipped with a multi-way valve. The multi-way valve may adjust a flow path of a cooling medium in the pipeline, thereby implementing flexible adjustment and control.

However, the current multi-way valve has problems such as a complex structure and an unreasonable design. This is not conducive to implementing a miniaturization design.

### SUMMARY

This application provides a multi-way valve that has a simple structure and is conducive to implementing a miniaturization design, a heat management apparatus, an energy storage device, and a vehicle.

According to a first aspect, this application provides a multi-way valve, which may include a housing, at least two valve cores, a transmission assembly, and a driver assembly. The housing is configured to accommodate the at least two valve cores. For the at least two valve cores, each valve core is configured to rotate relative to the housing. The at least two valve cores are sequentially disposed in an axial direction. The driver assembly is disposed on an outer side of the housing. The driver assembly is configured to drive, by using the transmission assembly, each valve core to rotate.

In the multi-way valve provided in this application, there is a flow channel in each valve core, so that a quantity of flow channels in the multi-way valve and a quantity of interfaces in the housing can be effectively increased. In addition, the plurality of valve cores are sequentially disposed in the axial direction, and no radial size of the multi-way valve is additionally increased. Therefore, this facilitates a miniaturization design of the multi-way valve. In addition, the interface in the housing may be distributed in the axial direction. Therefore, more interfaces with larger diameters can be disposed on a limited outer circumferential surface, to help ensure a flow rate of the multi-way valve. The driver assembly may drive, by using the transmission assembly, each valve core to rotate, so that mutual interference between different valve cores can be avoided. Therefore, when a connection state or a disconnection state between different interfaces needs to be switched, flexibility and reliability are good.

In an example, the at least two valve cores may include a first valve core and a second valve core. The driver assembly may include a first driver and a second driver. The transmission assembly may include a first shaft body and a second shaft body. A shaft center of the first shaft body coincides with a shaft center of the second shaft body. The first shaft body is connected to the first driver and the first valve core, so that the first driver can drive, by using the first shaft body, the first valve core to rotate. The second shaft body is connected to the second driver and the second valve core, so that the second driver can drive, by using the second shaft body, the second valve core to rotate. In summary, the first driver and the second driver may drive, by using two different shaft bodies, the first valve core and the second valve core to rotate respectively.

During specific disposition, the first shaft body may have a first end connected to the first driver. The second shaft body may have a second end connected to the second driver. The first end of the first shaft body and the second end of the second shaft body are sequentially disposed in the axial direction, so that both the first shaft body and the second shaft body can be effectively connected to corresponding drivers.

In an example, the at least two valve cores may include a third valve core and a fourth valve core. The driver assembly includes a third driver. The third driver has an output shaft. The transmission assembly includes a third shaft body and a fourth shaft body. A shaft center of the third shaft body coincides with a shaft center of the fourth shaft body. The third shaft body is connected to the third valve core. The fourth shaft body is connected to the fourth valve core. The transmission assembly further includes a first one-way transmission member and a second one-way transmission member. The first one-way transmission member is connected to the output shaft and the third shaft body. The second one-way transmission member is connected to the output shaft and the fourth shaft body. When rotating in a first rotation direction, the output shaft causes the first one-way transmission member to drive the third shaft body and the third valve core to rotate. When rotating in a second rotation direction, the output shaft causes the second one-way transmission member to drive the fourth shaft body and the fourth valve core to rotate. A rotation direction of the first rotation direction is opposite to a rotation direction of the second rotation direction. In summary, when rotating in different rotation directions, the output shaft of the third driver is configured to drive different valve cores to rotate, so that the single driver can drive different valve cores to rotate respectively, thereby helping reduce a quantity of used drivers.

In the foregoing example, the one-way transmission member is located between the driver and the shaft body. However, in actual application, the one-way transmission member may alternatively be located between the shaft body and the valve core.

For example, in an example, the at least two valve cores include a third valve core and a fourth valve core. The driver assembly includes a third driver. The transmission assembly includes a third shaft body. The third shaft body is connected to the third driver. The transmission assembly further includes a first one-way transmission member and a second one-way transmission member. The first one-way transmission member is connected to the third valve core and the third shaft body. The second one-way transmission member is connected to the fourth valve core and the third shaft body. When rotating in a first rotation direction, the third shaft body causes the first one-way transmission member to drive the third valve core to rotate. When rotating in a second rotation direction, the third shaft body causes the second one-way transmission member to drive the fourth valve core to rotate. A rotation direction of the first rotation direction is opposite to a rotation direction of the second rotation direction.

During specific disposition, in the two adjacent valve cores, each valve core is provided with an opening towards the other valve core. Two openings communicate when the two adjacent valve cores are at a first relative angle, to implement communication between channels of the two valve cores.

In an example, the at least one valve core includes at least two flow channels. The at least two flow channels are spaced apart in the axial direction. After the flow channel in the valve core is distributed in the axial direction, occupation of radial space can be avoided. In addition, a disposition quantity of flow channels can be further improved.

In an example, the housing includes a cavity and a plurality of interfaces. The cavity is configured to accommodate the at least two valve cores. The plurality of interfaces are configured to separately communicate with the cavity. The plurality of interfaces are sequentially disposed in the axial direction.

According to a second aspect, this application further provides a heat management apparatus, which may include a controller, a plurality of heat exchangers, and the foregoing multi-way valve. The multi-way valve is connected between the at least two heat exchangers, and is configured to connect to or disconnect from a path between the two heat exchangers. The controller is connected to the driver assembly, and is configured to control a rotation angle of the valve core by using the driver assembly, so that connection or disconnection between different heat exchangers is implemented, and heat exchange can be performed between the different heat exchangers.

In the heat management apparatus provided in this application, a single multi-way valve can be connected to a large quantity of heat exchangers by equipping with the foregoing multi-way valve, thereby effectively controlling a connection state or a disconnection state between the different heat exchangers. In addition, the foregoing multi-way valve has a simple structure and is easy to deploy. This can effectively improve convenience of deploying the heat management apparatus.

In an example, the heat management apparatus may include a heat pump apparatus and a radiator. The heat pump apparatus includes a compressor, a condenser, a throttle valve, and an evaporator that sequentially communicate through a circulation pipeline. The multi-way valve is connected between the condenser and the radiator, and is configured to connect to or disconnect from a path between the condenser and the radiator; and/or the multi-way valve is connected between the evaporator and the radiator, and is configured to connect to or disconnect from a path between the evaporator and the radiator. A heat pump system is disposed to effectively reduce energy consumption of a heat management system. In addition, a heating capability of the heat management system in a low-temperature environment and a cooling capability in a high-temperature environment can be effectively improved by using the heat pump system.

In an example, the heat management apparatus may further include a cold plate. The multi-way valve is connected between the cold plate and the radiator, and is configured to connect to or disconnect from a path between the cold plate and the radiator.

In an example, the multi-way valve is further connected between the cold plate and the condenser, and is configured to connect to or disconnect from a path between the cold plate and the condenser; and/or the multi-way valve is connected between the cold plate and the evaporator, and is configured to connect to or disconnect from a path between the cold plate and the evaporator.

In an example, the condenser, the evaporator, the radiator, and the cold plate are all connected to the same multi-way valve. In other words, a connection of the plurality of heat exchangers can be implemented by using one multi-way valve, to help reduce an equipment quantity of multi-way valves.

According to a third aspect, this application further provides an energy storage device, which may include a battery pack, a power conversion circuit, and the foregoing heat management apparatus. The heat exchanger in the heat management apparatus may be in heat-conducting contact with the battery pack. The power conversion circuit is connected to the battery pack, and is configured to: convert an alternating current into a direct current and provide the direct current to the battery pack, or convert a direct current from the battery pack into an alternating current. The heat exchanger may heat or cool the battery pack by applying the foregoing heat management apparatus, so that the battery pack is in a normal temperature range. This can effectively improve charging and discharging efficiency and safety of the battery pack.

According to a fourth aspect, this application further provides a vehicle, which may include a battery pack, a motor, and the foregoing heat management apparatus. Some heat exchangers in the heat management apparatus may be in heat-conducting contact with the battery pack. Some other heat exchangers may be in heat-conducting contact with the motor. The heat exchanger may heat or cool the battery pack and the motor by equipping with the foregoing heat management apparatus, so that running reliability of components such as the battery pack and the motor can be effectively ensured. In addition, deployment of the heat management apparatus is flexible.

### BRIEF DESCRIPTION OF DRAWINGS

FIG. 1 is a block diagram of a possible structure of a heat management apparatus according to an embodiment of this application;
FIG. 2 is a sectional view of a conventional multi-way valve according to an embodiment of this application;
FIG. 3 is a sectional view of a conventional multi-way valve after a valve core rotates according to an embodiment of this application;
FIG. 4 is a diagram of a three-dimensional structure of a multi-way valve according to an embodiment of this application;
FIG. 5 is a diagram of an exploded structure of a multi-way valve according to an embodiment of this application;
FIG. 6 is a diagram of a sectional structure of a multi-way valve according to an embodiment of this application;
FIG. 7 is a diagram of a sectional structure of another multi-way valve according to an embodiment of this application;
FIG. 8 is a simple diagram of a structure of a one-way shaft body according to an embodiment of this application;
FIG. 9 is a diagram of a sectional structure of another multi-way valve according to an embodiment of this application;
FIG. 10 is a diagram of an exploded structure of a partial structure of a multi-way valve according to an embodiment of this application;
FIG. 11 is a diagram of an exploded structure of a partial structure of a multi-way valve according to an embodiment of this application;
FIG. 12 is a diagram of an exploded structure of another multi-way valve according to an embodiment of this application;
FIG. 13 is a diagram of a sectional structure of another multi-way valve according to an embodiment of this application;
FIG. 14 is a diagram of a sectional structure of another multi-way valve according to an embodiment of this application;
FIG. 15 is a diagram of a sectional structure of a partial structure of another multi-way valve according to an embodiment of this application;
FIG. 16 is a block diagram of a structure of a heat management apparatus according to an embodiment of this application;
FIG. 17 is a diagram of a flow path of a medium in a heat management apparatus according to an embodiment of this application;
FIG. 18 is a diagram of another flow path of a medium in a heat management apparatus according to an embodiment of this application;
FIG. 19 is a diagram of another flow path of a medium in a heat management apparatus according to an embodiment of this application;
FIG. 20 is a diagram of another flow path of a medium in a heat management apparatus according to an embodiment of this application;
FIG. 21 is a diagram of another flow path of a medium in a heat management apparatus according to an embodiment of this application;
FIG. 22 is a diagram of another flow path of a medium in a heat management apparatus according to an embodiment of this application;
FIG. 23 is a diagram of another flow path of a medium in a heat management apparatus according to an embodiment of this application;
FIG. 24 is a block diagram of a structure of an energy storage device according to an embodiment of this application; and
FIG. 25 is a block diagram of a structure of a vehicle according to an embodiment of this application.

### DESCRIPTION OF EMBODIMENTS

To make objectives, technical solutions, and advantages of this application clearer, the following further describes this application in detail with reference to the accompanying drawings.

To facilitate understanding of a multi-way valve provided in embodiments of this application, the following first describes an application scenario of the multi-way valve.

The multi-way valve provided in embodiments of this application may be used in a heat management apparatus, and is configured to implement connection or disconnection between pipelines, to effectively adjust and control a flow path of a coolant.

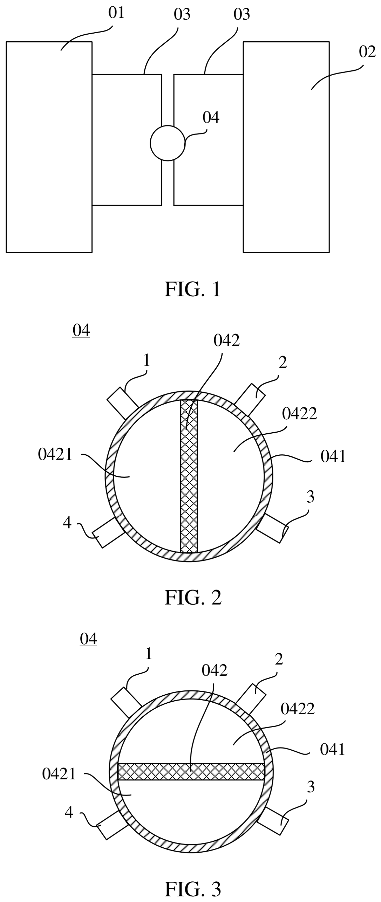

For example, as shown in FIG. 1, a possible heat management apparatus may include a radiator 01 and a condenser 02. Both the radiator 01 and the condenser 02 are connected to a pipeline 03. When a coolant flows in the pipeline 03, the coolant may perform heat exchange with the radiator 01 and the condenser 02, to implement a heat transfer function. In addition, different pipelines are connected to an interface of a multi-way valve 04. Connection or disconnection between the different pipelines may be implemented by changing a rotation position of a valve core in the multi-way valve 04, to effectively adjust and control a flow path of the coolant. It should be noted that, in specific application, the heat management apparatus may further include a component such as a water pump, a heater, a compressor, or an expansion valve. A quantity and a type of components equipped in the heat management apparatus may be set in a current conventional manner. Details are not described herein.

As shown in FIG. 2, the multi-way valve 04 may include a housing 041 and a valve core 042 disposed in the housing 041. The housing has four interfaces that are configured to connect to external pipelines: an interface 1, an interface 2, an interface 3, and an interface 4. There are two flow channels in the valve core 042: a first flow channel 0421 and a second flow channel 0422.

As shown in FIG. 2, the interface 1 may communicate with the interface 4 through the first flow channel 0421, and the interface 2 may communicate with the interface 3 through the second flow channel 0422.

As shown in FIG. 3, in this case, the valve core 042 rotates 90° in a counterclockwise direction. The interface 1 may communicate with the interface 2 through the second flow channel 0422, and the interface 3 may communicate with the interface 4 through the first flow channel 0421. That is, a communication status between different interfaces may be effectively switched by changing a rotation angle of the valve core 042.

With development and wide popularization of the heat management apparatus, a structure of the heat management apparatus is increasingly complex, and a quantity of pipelines is increasing. However, in the current multi-way valve 04, under a limited size, it is difficult for the housing 041 to provide more interfaces, and it is also difficult for the valve core 042 to provide more flow channels. Alternatively, when a quantity of interfaces is large, a diameter of a single interface is obviously reduced. Consequently, a flow rate of the multi-way valve is reduced. Therefore, in the conventional technology, more multi-way valves are usually equipped with in the heat management apparatus. However, after the quantity of multi-way valves 04 is large, use costs and disposition difficulty are obviously increased, and the large quantity of multi-way valves also occupy large space.

Therefore, embodiments of this application provide a multi-way valve that has a simple structure and that is conducive to implementing a miniaturization design.

To make objectives, technical solutions, and advantages of this application clearer, the following further describes this application in detail with reference to the accompanying drawings and specific embodiments.

In this embodiment of this application, the multi-way valve includes a housing, at least two valve cores, a transmission assembly, and a driver assembly. The housing is configured to accommodate the at least two valve cores. For the at least two valve cores, each valve core is configured to rotate relative to the housing. The at least two valve cores are sequentially disposed in an axial direction. The driver assembly is disposed on an outer side of the housing. The driver assembly is configured to drive, by using the transmission assembly, each valve core to rotate. In this embodiment of this application, the axial direction is the same as an axial direction of the valve core.

In an embodiment, the housing includes a cavity and a plurality of interfaces. The cavity is configured to accommodate the at least two valve cores. The plurality of interfaces are configured to separately communicate with the cavity. The plurality of interfaces are sequentially disposed in the axial direction.

In an embodiment, in the two adjacent valve cores, each valve core is provided with an opening towards the other valve core. Two openings communicate when the two adjacent valve cores are at a first relative angle.

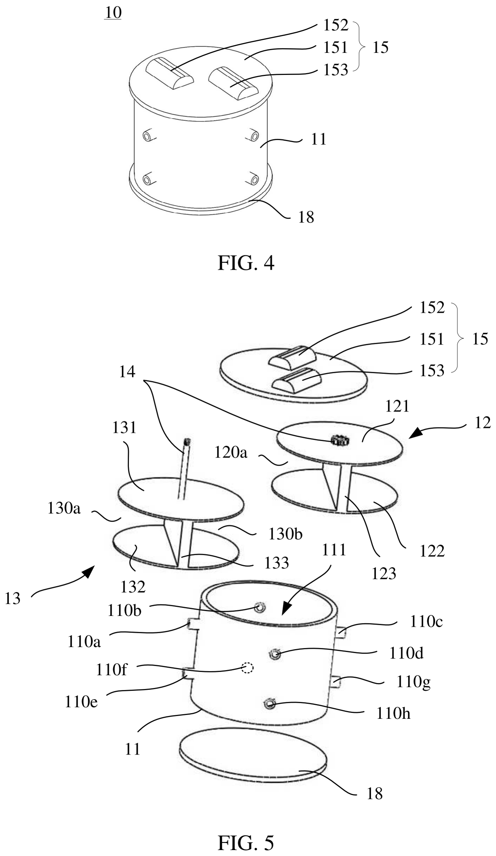

As shown in FIG. 4 and FIG. 5, in an example provided in this application, a multi-way valve 10 may include a housing 11, a first valve core 12, a second valve core 13, a transmission assembly 14, and a driver assembly 15. There is a cavity 111 inside the housing 11. The first valve core 12 and the second valve core 13 are rotatably disposed in the cavity 111, and the first valve core 12 and the second valve core 13 are sequentially disposed in an axial direction. When rotation angles of the first valve core 12 and the second valve core 13 are adjusted, connection or disconnection between different interfaces may be implemented. The driver assembly 15 is configured to generate a mechanical driving force. The transmission assembly 14 is connected to the first valve core 12, the second valve core 13, and the driver assembly 15, and is configured to transfer the mechanical driving force generated by the driver assembly 15 to the first valve core 12 and the second valve core 13, so that the driver assembly 15 can drive, by using the transmission assembly 14, each of the first valve core 12 and the second valve core 13 to rotate.

In the multi-way valve 10 provided in this application, there is a flow channel in the first valve core 12, and there is also a flow channel in the second valve core 13, so that a quantity of flow channels in the multi-way valve 10 and a quantity of interfaces in the housing 11 can be effectively increased. In addition, the first valve core 12 and the second valve core 13 are sequentially disposed in the axial direction, and no radial size of the multi-way valve 10 is additionally increased. Therefore, this facilitate a miniaturization design of the multi-way valve 10. In addition, the interface in the housing 11 may be distributed in the axial direction. Therefore, more interfaces with larger diameters can be disposed on a limited outer circumferential surface, to help ensure a flow rate of the multi-way valve 10. The driver assembly 15 may drive, by using the transmission assembly 14, the first valve core 12 and the second valve core 13 to rotate separately, so that mutual interference between the first valve core 12 and the second valve core 13 can be avoided. Therefore, when a connection state or a disconnection state between the different interfaces needs to be switched, flexibility and reliability are good.

It is first noted that, to facilitate understanding of technical solutions of this application, in the example provided in this application, there are two flow channels in the first valve core 12: a flow channel 120a and a flow channel 120b. There are two flow channels in the second valve core 13: a flow channel 130a and a flow channel 130b. The housing 11 has eight interfaces: an interface 110a, an interface 110b, an interface 110c, an interface 110d, an interface 110e, an interface 110f, an interface 110g, and an interface 110h. The interface 110a, the interface 110b, the interface 110c, and the interface 110d are disposed corresponding to the first valve core 12, and may communicate with the flow channel 120a and the flow channel 120b in the first valve core 12. The interface 110e, the interface 110f, the interface 110g, and the interface 110h are disposed corresponding to the second valve core 13, and may communicate with the flow channel 130a and the flow channel 130b in the second valve core 13.

In another example, there may alternatively be one flow channel, three flow channels, or more flow channels in the first valve core 12. There may alternatively be one flow channel, three flow channels, or more flow channels in the second valve core 13. This is not limited in this application.

In actual application, a structure shape of the housing 11 may be diversified.

For example, as shown in FIG. 4 and FIG. 5, in an example provided in this application, the housing 11 is of a cylindrical structure, and has a first end (for example, an upper end in FIG. 5) and a second end (for example, a lower end in FIG. 5) that are disposed opposite to each other. There is the cylindrical cavity 111 inside the housing 11.

The driver assembly 15 is disposed at the first end of the housing 11, and there is an end cover 18 at the second end. The driver assembly 15 can cover the first end of the housing 11, and the end cover 18 can cover the second end, to ensure airtightness of the cavity 111.

Specifically, the driver assembly 15 includes a housing 151, a first driver 152, and a second driver 153. Both the first driver 152 and the second driver 153 are disposed in the housing 151. The first driver 152 and the second driver 153 may be specifically components that can generate the driving force, such as a motor. Specific types of the first driver 152 and the second driver 153 are not limited in this application.

In the example provided in this application, the driver assembly 15 is of an integrated structure. In actual application, both the first driver 152 and the second driver 153 in the driver assembly 15 may be disposed on a same side (for example, the first end) of the housing 11. Therefore, it is helpful to improve convenience during manufacturing and assembly. In addition, during specific disposition, a cabling layout of a conductive line is also convenient.

Alternatively, it may be understood that, if the first driver 152 is disposed in the housing 151, and the second driver 153 is disposed in the end cover 18, two independent cables are required to connect to the first driver 152 and the second driver 153 during cabling. Therefore, disposition paths and disposition difficulty of the cables are increased. In the example provided in this application, after the first driver 152 and the second driver 153 are integrated and disposed in the housing 151, a cable configured to connect to the first driver 152 and the second driver 153 may be located in a same disposition path during cabling. This helps reduce a disposition path and cabling difficulty of the cable. In addition, the end cover 18 does not need to provide an installation position for the driver. Therefore, a structure of the end cover 18 may be simple, to help improve convenience during manufacturing. In addition, in some examples, an interface may alternatively be disposed in the end cover 18. Therefore, flexibility of a disposition quantity and a position for disposing interfaces can be effectively improved. In the following example, an example in which the interfaces are all disposed on the outer circumferential surface of the housing 11 is used for specific description.

In addition, during specific disposition, structures of the first valve core 12 and the second valve core 13 may be diversified.

For example, as shown in FIG. 5, in the example provided in this application, the first valve core 12 is approximately cylindrical. Specifically, the first valve core 12 has a plate body 121 and a plate body 122 that are disposed opposite to each other, and there is a partition plate 123 between the plate body 121 and the plate body 122. One side of the partition plate 123 is the flow channel 120a, and the other side of the partition plate 123 is the flow channel 120b.

A structure of the second valve core 13 is approximately the same as that of the first valve core 12, to be specific, the second valve core 13 has a plate body 131 and a plate body 132 that are disposed opposite to each other, and there is a partition plate 133 between the plate body 131 and the plate body 132. One side of the partition plate 133 is the flow channel 130a, and the other side of the partition plate 133 is the flow channel 130b.

As shown in FIG. 5, edges of the plate body 121 and the plate body 122 of the first valve core 12 are attached to an inner wall of the cavity 111 in an airtight manner, and edges of the plate body 131 and the plate body 132 of the second valve core 13 are attached to the inner wall of the cavity 111 in an airtight manner, so that the flow channel 120a, the flow channel 120b, the flow channel 130a, and the flow channel 130b have good airtightness.

In addition, when the transmission assembly 14 is disposed, types of the transmission assembly 14 may alternatively be diversified.

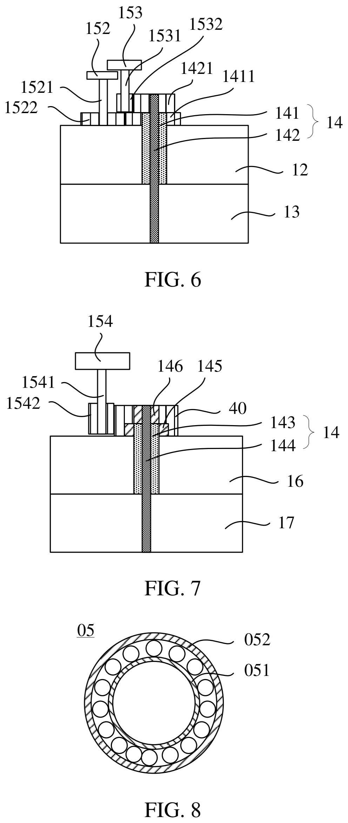

For example, as shown in FIG. 5 and FIG. 6, in an example provided in this application, the transmission assembly 14 includes a first shaft body 141 and a second shaft body 142. A shaft center of the first shaft body 141 coincides with a shaft center of the second shaft body 142. The first shaft body 141 is connected to the first driver 152 and the first valve core 12. The second shaft body 142 is connected to the second driver 153 and the second valve core 13.

Specifically, in the example provided in this application, the first shaft body 141 and the first valve core 12 are of an integrated structure. The first shaft body 141 is located at a shaft center of the first valve core 12, and a first end (for example, an upper end in FIG. 6) of the first shaft body 141 extends out of an outer surface of the first valve core 12. In addition, an outer circumferential surface of the first end of the first shaft body 141 has a gear-shaped part 1411. An output shaft 1521 of the first driver 152 has a gear-shaped part 1522 engaged with the gear-shaped part 1411. When rotating, the output shaft 1521 of the first driver 152 may drive the first shaft body 141 and the first valve core 12 to rotate synchronously.

In addition, the second shaft body 142 and the second valve core 13 are of an integrated structure. The second shaft body 142 is located at a shaft center of the second valve core 13, and a second end (for example, an upper end in FIG. 6) of the second shaft body 142 extends out of the first end of the first shaft body 141. In addition, a diameter of the second shaft body 142 is less than a diameter of the first shaft body 141. The shaft center of the first shaft body 141 is provided with a through hole. The second shaft body 142 penetrates through the through hole. The second end of the second shaft body 142 extends out of the first shaft body 141. The first end and the second end are sequentially disposed in the axial direction. In addition, an outer circumferential surface of the second end of the second shaft body 142 further has a gear-shaped part 1421. An output shaft 1531 of the second driver 153 has a gear-shaped part 1532 engaged with the gear-shaped part 1421. When rotating, the output shaft 1531 of the second driver 153 may drive the second shaft body 142 and the second valve core 13 to rotate synchronously. In addition, after the first end (or the gear-shaped part 1411) of the first shaft body 141 and the second end (or the gear-shaped part 1421) of the second shaft body 142 are sequentially disposed in the axial direction, position interference between the first shaft body 141 and the second shaft body 142 can be avoided, so that the first end of the first shaft body 141 can be effectively connected to the first driver 152, and the second end of the second shaft body 142 can be effectively connected to the second driver 153.

In the foregoing example, the first shaft body 141 and the first valve core 12 are integrated in a structure design. During manufacturing, the first shaft body 141 and the first valve core 12 may be manufactured and molded at the same time, and a fixed connection between the first shaft body 141 and the first valve core 12 is implemented. In another example, the first shaft body 141 and the first valve core 12 may alternatively be structures that are independent of each other, and a fixed connection between the first shaft body 141 and the first valve core 12 may be implemented in a manner such as welding. A manufacturing manner and a connection manner of the first shaft body 141 and the first valve core 12 are not limited in this application. In addition, in another example, the second shaft body 142 and the second valve core 13 may alternatively be structures that are independent of each other. Details are not described herein.

It should be noted that a nested structure design is used between the first shaft body 141 and the second shaft body 142, and the first shaft body 141 and the second shaft body 142 may rotate relative to each other. Therefore, when the first shaft body 141 rotates, the second shaft body 142 is not driven to rotate. Correspondingly, when the second shaft body 142 rotates, the first shaft body 141 is not driven to rotate.

In summary, in the example provided in this application, the first driver 152 may drive, by using the first shaft body 141, the first valve core 12 to rotate individually, and the second driver 153 may drive, by using the second shaft body 142, the second valve core 13 to rotate individually, so that the driver assembly 15 can drive the first valve core 12 and the second valve core 13 to rotate individually.

In the foregoing example, each valve core is equipped with an independent driver to implement a rotation function. In another example, a single driver may alternatively drive two valve cores to rotate separately, thereby reducing a configuration quantity of drivers.

For example, as shown in FIG. 7, in an example provided in this application, a multi-way valve 10 includes a third valve core 16 and a fourth valve core 17. A driver assembly 15 may include a third driver 154. The third driver 154 has an output shaft 1541. A transmission assembly 14 includes a third shaft body 143 and a fourth shaft body 144. A shaft center of the third shaft body 143 coincides with a shaft center of the fourth shaft body 144. The third shaft body 143 is connected to the third valve core 16. The fourth shaft body 144 is connected to the fourth valve core 17.

The transmission assembly 14 further includes a first one-way transmission member 145 and a second one-way transmission member 146. The first one-way transmission member 145 is connected to the output shaft 1541 and the third shaft body 143. The second one-way transmission member 146 is connected to the output shaft 1541 and the fourth shaft body 144. When rotating in a first rotation direction, the output shaft 1541 causes the first one-way transmission member 145 to drive the third shaft body 143 and the third valve core 16 to rotate. When rotating in a second rotation direction, the output shaft 1541 causes the second one-way transmission member 146 to drive the fourth shaft body 144 and the fourth valve core 17 to rotate. A rotation direction of the first rotation direction is opposite to a rotation direction of the second rotation direction.

Specifically, the first one-way transmission member 145 and the second one-way transmission member 146 can transfer only the one-way driving force. In actual application, the first one-way transmission member 145 and the second one-way transmission member 146 may be specifically one-way bearings, ratchet mechanisms, or the like. Specific types of the first one-way transmission member 145 and the second one-way transmission member 146 are not limited in this application.

To facilitate understanding of the technical solutions of this application, the following uses an example in which the first one-way transmission member 145 and the second one-way transmission member 146 are the one-way bearings for description.

As shown in FIG. 8, a one-way bearing 05 may include an inner ring 051 and an outer ring 052 that are coaxially disposed. When the inner ring 051 rotates in a specific rotation direction (for example, a clockwise direction), the outer ring 052 can rotate synchronously with the inner ring 051. When the inner ring 051 rotates in another rotation direction (for example, a counterclockwise direction), the outer ring 052 does not rotate with the inner ring, to implement a one-way rotation function of the one-way bearing 05. The one-way bearing 05 may be of a currently commonly used type, which is not described in detail herein.

As shown in FIG. 7, in the example provided in this application, the third shaft body 143 is fastened to the third valve core 16. The first one-way transmission member 145 is connected between the third shaft body 143 and a gear 40. The gear 40 is engaged with a gear-shaped part 1542 of the output shaft 1541 of the third driver 154. The fourth shaft body 144 is fastened to the fourth valve core 17. The second one-way transmission member 146 is connected between the fourth shaft body 144 and the gear 40. When rotating in the first rotation direction, the output shaft 1541 of the third driver 154 may drive, by using the first one-way transmission member 145, the third shaft body 143 and the third valve core 16 to rotate, and the fourth shaft body 144 and the fourth valve core 17 are not rotated. When rotating in the second rotation direction, the output shaft 1541 of the third driver 154 may drive, by using the second one-way transmission member 146, the fourth shaft body 144 and the fourth valve core 17 to rotate, and the third shaft body 143 and the third valve core 16 are not rotated.

In summary, the output shaft 1541 of the third driver 154 may drive different valve cores to rotate when rotating in different rotation directions. In this way, the single driver can drive the different valve cores to rotate separately, thereby helping reduce a quantity of used drivers.

In addition, in the foregoing example, the first one-way transmission member 145 is located in a transfer path between the third driver 154 and the third shaft body 143. The second one-way transmission member 146 is located in a transfer path between the third driver 154 and the fourth shaft body 144. However, the first one-way transmission member 145 and the second one-way transmission member 146 may alternatively be connected to another position.

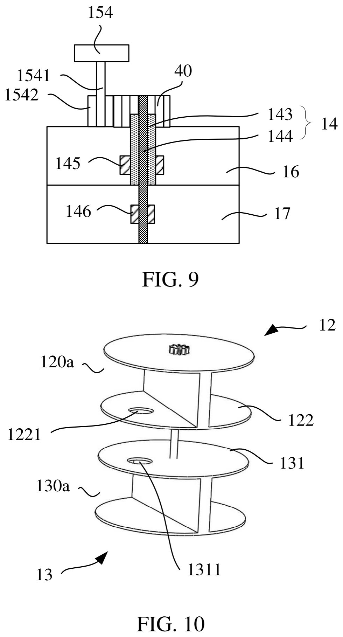

For example, as shown in FIG. 9, in an example provided in this application, the first one-way transmission member 145 is connected between the third shaft body 143 and the third valve core 16. The second one-way transmission member 146 is connected between the fourth shaft body 144 and the fourth valve core 17. The gear 40 is fastened to the third shaft body 143 and the fourth shaft body 144.

When the output shaft 1541 of the third driver 154 rotates, the third shaft body 143 and the fourth shaft body 144 may rotate synchronously with the output shaft 1541 when the gear-shaped part 1542 is engaged with and the gear 40. In addition, when the output shaft 1541 of the third driver 154 rotates in the first rotation direction, the third shaft body 143 may drive, by using the first one-way transmission member 145, the third valve core 16 to rotate, and the fourth valve core 17 is not rotated. When the output shaft 1541 of the third driver 154 rotates in the second rotation direction, the fourth valve core 17 is driven, by using the second one-way transmission member 146, to rotate, and the third valve core 16 is not rotated.

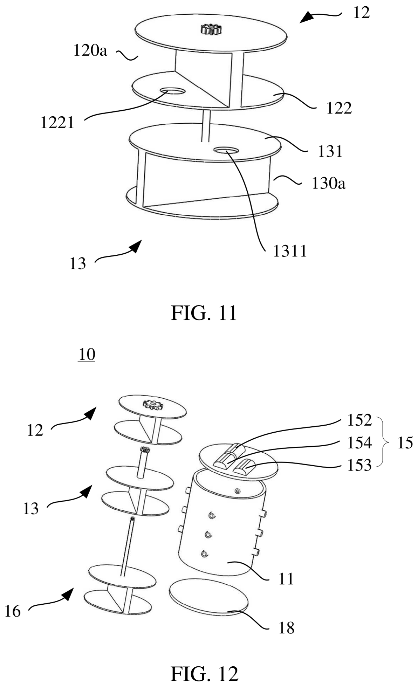

In addition, as shown in FIG. 10 and FIG. 11, in another example provided in this application, in some cases, flow channels between the two adjacent valve cores may alternatively communicate.

Specifically, as shown in FIG. 10, in an example provided in this application, the first valve core 12 is provided with an opening 1221 towards the second valve core 13. The second valve core 13 is provided with an opening 1311 towards the first valve core 12.

As shown in FIG. 10, in this case, the first valve core 12 and the second valve core 13 are at a first relative angle, so that the flow channel 120a may communicate with the flow channel 130a when the opening 1221 and the opening 1311 are aligned. In addition, as shown in FIG. 11, the first valve core 12 and the second valve core 13 are at a second relative angle, the plate body 131 is attached to the opening 1221 in an airtight manner, and the plate body 122 is attached to the opening 1311 in an airtight manner, so that airtightness of the flow channel 120a and the flow channel 130a can be ensured. FIG. 10 and FIG. 11 are both diagrams of exploded structures. In actual application, plate surfaces that are of the plate body 122 and the plate body 131 and that are opposite to each other are in a position that the plate body 122 and the plate body 131 are attached to each other in an airtight manner.

It should be noted that the foregoing first relative angle is a range, and in the angle range, the opening 1221 and the opening 1311 overlap in the axial direction. The foregoing second relative angle is any angle other than the first relative angle.

In actual application, shapes, positions, and quantities of the opening 1221 and the opening 1311 may be flexibly set depending on an actual requirement. Details are not described herein.

In the foregoing example, an example in which the multi-way valve 10 includes the two valve cores is used for description. In an actual application, the multi-way valve 10 may alternatively include three, four, or more valve cores. In addition, when the multi-way valve 10 includes three or more valve cores, each driver may drive a corresponding valve core to rotate, or a single driver may drive two valve cores to rotate.

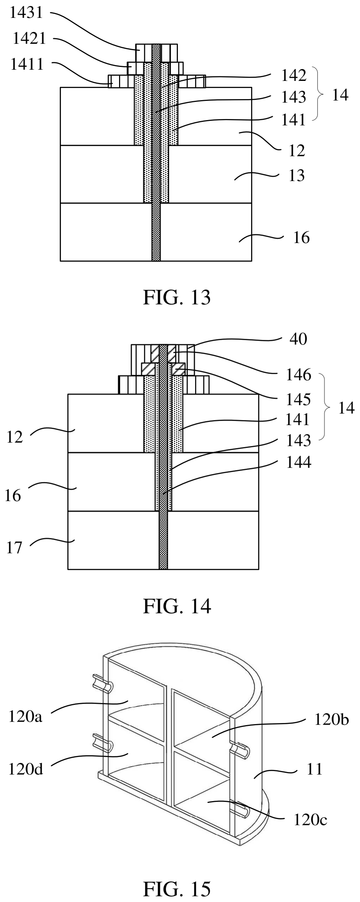

For example, as shown in FIG. 12 and FIG. 13, in an example provided in this application, each driver may drive a corresponding valve core to rotate. Specifically, a multi-way valve 10 may include three valve cores: a first valve core 12, a second valve core 13, and a third valve core 16. The first valve core 12, the second valve core 13, and the third valve core 16 are sequentially disposed in an axial direction. In addition, a transmission shaft assembly 14 includes a first shaft body 141, a second shaft body 142, and a third shaft body 143. The driver assembly 15 includes a first driver 152, a second driver 153, and a third driver 154. The first shaft body 141 is connected to the first driver 152 and the first valve core 12, so that the first driver 152 can drive, by using the first shaft body 141, the first valve core 12 to rotate. The second shaft body 142 is connected to the second driver 153 and the second valve core 13, so that the second driver 153 can drive, by using the second shaft body 142, the second valve core 13 to rotate. The third shaft body 143 is connected to the third driver 154 and the third valve core 16, so that the third driver 154 can drive, by using the third shaft body 143, the third valve core 16 to rotate.

Alternatively, it may be understood that, compared the multi-way valve 10 shown in FIG. 6 with that in FIG. 13, the third valve core 16, the third shaft body 143, and the third driver 154 are added in FIG. 13. Therefore, for specific structures of the first driver 152, the first shaft body 141, the second driver 153, and the second shaft body 142, refer to the foregoing specific descriptions. Details are not described herein again.

The third shaft body 143 and the third valve core 16 are of an integrated structure. The third shaft body 143 is located at a shaft center of the third valve core 16, and a first end (for example, an upper end in FIG. 13) of the third shaft body 143 extends out of one end of the second shaft body 142. In addition, a diameter of the third shaft body 143 is less than a diameter of the second shaft body 142. A shaft center of the second shaft body 142 is provided with a through hole. The third shaft body 143 penetrates through the through hole. The first end (for example, the upper end in FIG. 13) of the third shaft body 143 extends out of the end of the second shaft body 142. In addition, an outer circumferential surface of the first end of the third shaft body 143 further has a gear-shaped part 1431. An output shaft of the third driver 154 has a gear-shaped part engaged with the gear-shaped part. When rotating, the output shaft of the third driver 154 may drive the third shaft body 143 and the third valve core 16 to rotate synchronously.

Alternatively, as shown in FIG. 14, in another example provided in this application, a first driver 152 may drive one valve core to rotate, and a third driver 154 may drive two valve cores to rotate. Specifically, a multi-way valve 10 may include three valve cores: a first valve core 12, a third valve core 16, and a fourth valve core 17. The first valve core 12, the third valve core 16, and the fourth valve core 17 are sequentially disposed in an axial direction. In addition, a transmission assembly 14 includes a first shaft body 141, a third shaft body 143, a fourth shaft body 144, a first one-way transmission member 145, and a second one-way transmission member 146. An output shaft of the first driver 152 is connected to the first valve core 12 through the first shaft body 141, so that the first valve core 12 can rotate synchronously with the output shaft of the first driver 152. An output shaft of the third driver 154 is engaged with a gear 40, so that the gear 40 can rotate synchronously with the output shaft of the third driver 154. In addition, the gear 40 is connected to the third shaft body 143 through the first one-way transmission member 145. The gear 40 is connected to the fourth shaft body 144 through the second one-way transmission member 146. When rotating in a first rotation direction, the gear 40 may drive, by using the first one-way transmission member 145, the third shaft body 143 and the third valve core 16 to rotate, and the fourth shaft body 144 and the fourth valve core 17 are not rotated. When rotating in a second rotation direction, the gear 40 may drive, by using the second one-way transmission member 146, the fourth shaft body 144 and the fourth valve core 17 to rotate, and the third shaft body 143 and the third valve core 16 are not rotated.

In addition, during specific implementation, disposition quantities and manners of valve cores, drivers, and one-way transmission members may be appropriately selected according to an actual requirement. Details are not described herein.

In addition, in the foregoing example, a flow channel of the valve core is distributed in a radial direction. However, in another example, a flow channel of the valve core may alternatively be distributed in an axial direction.

For example, as shown in FIG. 15, in an example provided in this application, there are four flow channels in the valve cores: a flow channel 120a, a flow channel 120b, a flow channel 120c, and a flow channel 120d. The flow channel 120a and the flow channel 120b are located on a same layer in an axial direction, and the flow channel 120c and the flow channel 120d are located on a same layer in an axial direction.

Certainly, during specific disposition, a housing 11 of the multi-way valve 10 has an interface configured to communicate with each of the foregoing flow channels, which is not described in detail herein. In the example provided in this application, the flow channel in the valve core may be distributed in the axial direction, so that occupation of radial space can be avoided. In addition, a disposition quantity of flow channels can be further improved. Alternatively, it may be understood that the valve cores in FIG. 15 may be considered as two first valve cores 12 or second valve cores 13 of integrated structures shown in FIG. 5.

In actual application, the multi-way valve 10 may be applied to a plurality of scenarios in which a flow path of a coolant needs to be adjusted and controlled.

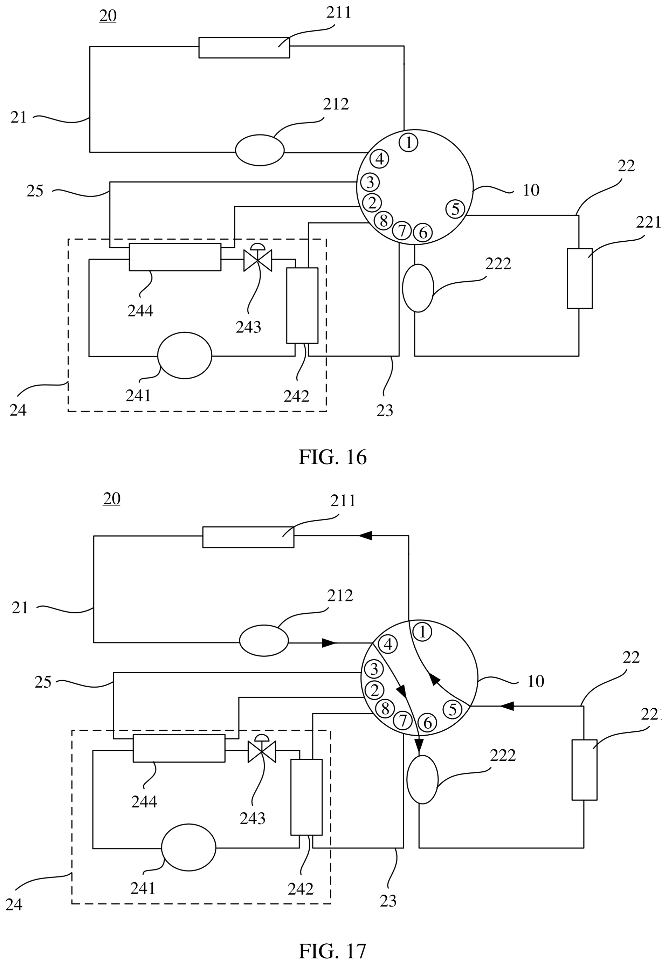

For example, as shown in FIG. 16, an embodiment of this application further provides a heat management apparatus 20. The heat management apparatus 20 may include a multi-way valve 10 and a plurality of heat exchangers. The multi-way valve 10 may be connected between at least two heat exchangers, and is configured to connect to or disconnect from a path between the at least two heat exchangers.

In specific application, the heat exchanger may be specifically an evaporator, a condenser, a heater, a cold plate, or the like. A specific type of the heat exchanger is not limited in this application. As shown in FIG. 16, in an example provided in this application, the plurality of heat exchangers are a cold plate 211, a radiator 221, a condenser 242, and an evaporator 244 respectively.

Specifically, the heat management apparatus 20 may include a first circulation pipeline 21, a second circulation pipeline 22, a third circulation pipeline 23, a heat pump apparatus 24, and the multi-way valve 10. The first circulation pipeline 21, the second circulation pipeline 22, and the third circulation pipeline 23 are all connected to the multi-way valve 10. The multi-way valve 10 can effectively control connection states or disconnection states of different circulation pipelines. In addition, the multi-way valve can further effectively control the connection states or the disconnection states between the different circulation pipelines, to implement heat exchanges between the different circulation pipelines.

Specifically, in the example provided in this application, the first circulation pipeline 21 includes the cold plate 211 and a water pump 212. The water pump 212 is configured to increase a speed at which the coolant flows in the first circulation pipeline 21, to improve heat exchange efficiency of the cold plate 211. In actual application, a to-be-heat-dissipated component may be in heat-conducting attached to the cold plate 211, so that the to-be-heat-dissipated component can be cooled by using the cold plate 211.

The second circulation pipeline 22 includes the radiator 221 and a water pump 222. The water pump 222 is configured to increase a speed at which the coolant flows in the second circulation pipeline 22, to improve heat exchange efficiency of the radiator 221. In actual application, the radiator 221 may perform effective heat exchange with an external environment, so that the radiator 221 may be cooled or heated by using external air.

The heat pump apparatus 24 may include a compressor 241, the condenser 242, a throttle valve 243, and the evaporator 244 that sequentially communicate through the circulation pipeline. When a medium circulates in a path formed by the compressor 241, the condenser 242, the throttle valve 243, and the evaporator 244, a temperature of the evaporator 244 is low, and a temperature of the condenser 242 is high, so that heat can be transferred or transported between the evaporator 244 and the condenser 242.

The heat pump apparatus 24 is connected to the multi-way valve 10 through the third circulation pipeline 23, so that heat exchange between the heat pump apparatus 24 and other circulation pipelines (for example, the first circulation pipeline 21, the second circulation pipeline 22, and the third circulation pipeline 23) can be implemented.

For example, the condenser 242 in the heat pump apparatus 24 may communicate with the second circulation pipeline 22 through the third circulation pipeline 23 and the multi-way valve 10, so that heat of the condenser 242 can be transferred to the radiator 221 and dissipated to outside. This ensures normal running of the heat pump apparatus 24. The evaporator 244 in the heat pump apparatus 24 may be in heat-conducting contact with a to-be-cooled component, to cool the to-be-cooled component.

Alternatively, in some examples, the evaporator 244 in the heat pump apparatus 24 may be connected to the multi-way valve 10 through a circulation pipeline 25. In this way, a cooling capacity in the evaporator 244 can be transferred to the cold plate 211, to improve cooling efficiency of the cold plate 211.

In actual application, flow paths and flow directions of a cooling medium in different circulation pipelines may be diversified.

For example, as shown in FIG. 17, in an example provided in this application, when an ambient temperature is appropriate (for example, in spring or fall), a working mode of the heat management apparatus 20 is as follows.

Specifically, in FIG. 17, a circulation path is shown. The cold plate 211 may dissipate heat by using the radiator 221. A flow path of the cooling medium is: the cold plate 211, the water pump 212, an interface 4, an interface 6, the water pump 222, the radiator 221, an interface 5, and an interface 1 sequentially.

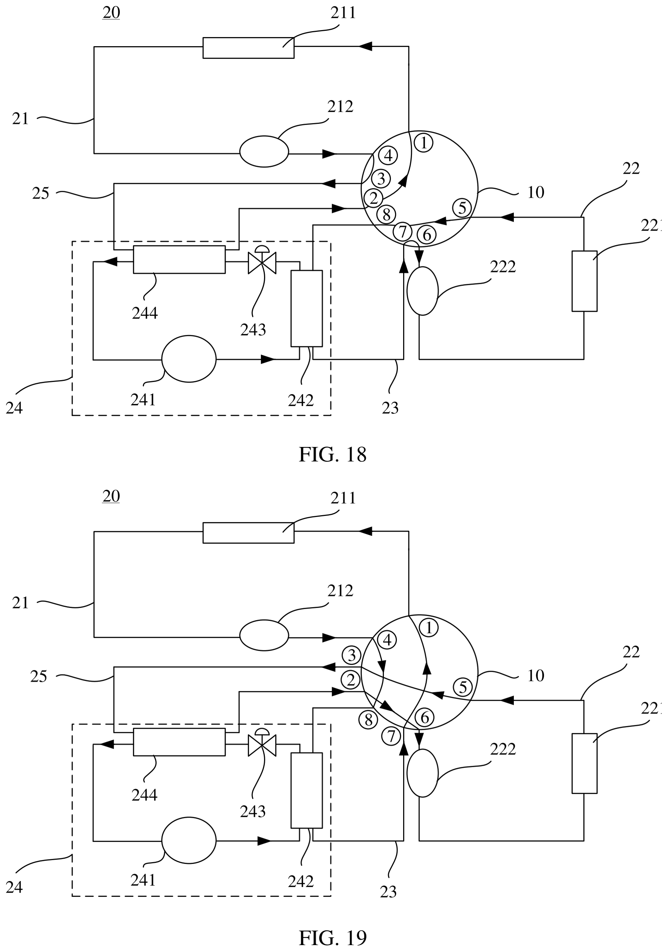

In addition, as shown in FIG. 18, in another example provided in this application, when an ambient temperature is high (for example, in summer), a working mode of the heat management apparatus 20 is as follows.

Specifically, in FIG. 18, three circulation paths are shown.

In a first circulation path, the heat pump apparatus 24 may perform refrigeration work. A flow path of a refrigeration medium is: the compressor 241, the condenser 242, the throttle valve 243, and the evaporator 244 sequentially.

In a second circulation path, the condenser 242 may dissipate heat by using the radiator 221. A flow path of the cooling medium is: the condenser 242, an interface 7, an interface 6, the water pump 222, the radiator 221, an interface 5, and an interface 8 sequentially.

In a third circulation path, the cold plate 211 may dissipate heat by using the evaporator 244. A flow path of the cooling medium is: the cold plate 211, the water pump 212, an interface 4, an interface 3, the evaporator 244, an interface 2, and an interface 1 sequentially.

In addition, as shown in FIG. 19, in another example provided in this application, when an ambient temperature is low (for example, in winter), a working mode of the heat management apparatus 20 is as follows.

Specifically, in FIG. 19, three circulation paths are shown.

In a first circulation path, the heat pump apparatus 24 may perform heating work. A flow path of a refrigeration medium is: the compressor 241, the condenser 242, the throttle valve 243, and the evaporator 244 sequentially.

In a second circulation path, the evaporator 244 may be heated by using the radiator 221. A flow path of the cooling medium is: the evaporator 244, an interface 2, an interface 6, the water pump 222, the radiator 221, an interface 5, and an interface 3 sequentially.

In a third circulation path, the cold plate 211 may be heated by using the condenser 242. A flow path of the cooling medium is: the cold plate 211, the water pump 212, an interface 4, an interface 8, the condenser 242, an interface 7, and an interface 1 sequentially.

Refer to FIG. 4 and FIG. 5. In the example provided in this application, the multi-way valve 10 includes two valve cores: the first valve core 12 and the second valve core 13. The housing 11 has eight interfaces: the interface 110a, the interface 110b, the interface 110c, the interface 110d, the interface 110e, the interface 110f, the interface 110g, and the interface 110h. The interface 110a, the interface 110b, the interface 110c, and the interface 110d are disposed corresponding to the first valve core 12, and may communicate with the flow channel 120a and the flow channel 120b in the first valve core 12. The interface 110e, the interface 110f, the interface 110g, and the interface 110h are disposed corresponding to the second valve core 13, and may communicate with the flow channel 130a and the flow channel 130b in the second valve core 13.

Refer to FIG. 4, FIG. 5, and FIG. 20. The interface 110a is an interface 1, the interface 110b is an interface 2, the interface 110c is an interface 3, and the interface 110d is an interface 4. The interface 110e is an interface 5, the interface 110f is an interface 6, the interface 110g is an interface 7, and the interface 110h is an interface 8.

During specific disposition, different flow channels may be selectively connected to interfaces (for example, the interface 110a, the interface 110b, the interface 110c, and the interface 110d) corresponding to the first valve core 12, or may be selectively connected to interfaces (for example, the interface 110e, the interface 110f, the interface 110g, and the interface 110h) corresponding to the second valve core 13.

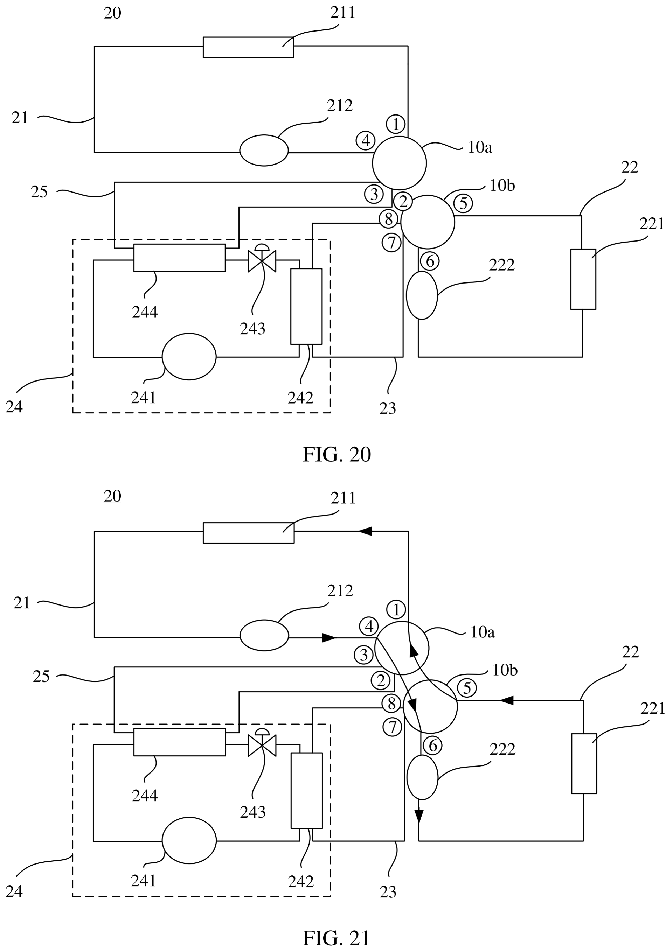

For example, as shown in FIG. 20, in the example provided in this application, to facilitate understanding, the first valve core 12 and the interfaces corresponding to the first valve core 12 are represented as a multi-way valve 10a, and the second valve core 13 and the interfaces corresponding to the second valve core 13 are represented as a multi-way valve 10b.

In actual application, flow paths and flow directions of a cooling medium in different circulation pipelines may be diversified.

For example, as shown in FIG. 21, in an example provided in this application, when an ambient temperature is appropriate (for example, in spring or fall), a working mode of the heat management apparatus 20 is as follows.

Specifically, in FIG. 21, a circulation path is shown. The cold plate 211 may dissipate heat by using the radiator 221. A flow path of the cooling medium is: the cold plate 211, the water pump 212, the interface 4, the interface 6, the water pump 222, the radiator 221, the interface 5, and the interface 1 sequentially.

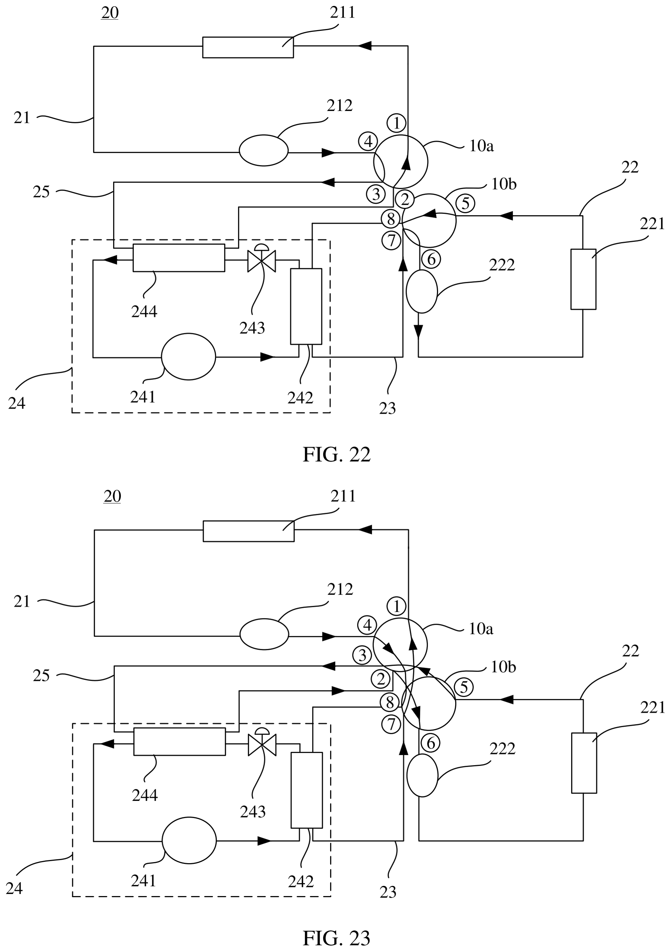

In addition, as shown in FIG. 22, in another example provided in this application, when an ambient temperature is high (for example, in summer), a working mode of the heat management apparatus 20 is as follows.

Specifically, in FIG. 22, three circulation paths are shown.

In a first circulation path, the heat pump apparatus 24 may perform refrigeration work. A flow path of a refrigeration medium is: the compressor 241, the condenser 242, the throttle valve 243, and the evaporator 244 sequentially.

In a second circulation path, the condenser 242 may dissipate heat by using the radiator 221. A flow path of the cooling medium is: the condenser 242, the interface 7, the interface 6, the water pump 222, the radiator 221, the interface 5, and the interface 8 sequentially.

In a third circulation path, the cold plate 211 may dissipate heat by using the evaporator 244. A flow path of the cooling medium is: the cold plate 211, the water pump 212, the interface 4, the interface 3, the evaporator 244, the interface 2, and the interface 1 sequentially.

In addition, as shown in FIG. 23, in another example provided in this application, when an ambient temperature is low (for example, in winter), a working mode of the heat management apparatus 20 is as follows.

Specifically, in FIG. 23, three circulation paths are shown.

In a first circulation path, the heat pump apparatus 24 may perform heating work. A flow path of a refrigeration medium is: the compressor 241, the condenser 242, the throttle valve 243, and the evaporator 244 sequentially.

In a second circulation path, the evaporator 244 may be heated by using the radiator 221. A flow path of the cooling medium is: the evaporator 244, the interface 2, the interface 6, the water pump 222, the radiator 221, the interface 5, and the interface 3 sequentially.

In a third circulation path, the cold plate 211 may be heated by using the condenser 242. A flow path of the cooling medium is: the cold plate 211, the water pump 212, the interface 4, the interface 8, the condenser 242, the interface 7, and the interface 1 sequentially.

In the example provided above, only a possible architecture of the heat management apparatus 20 is represented. However, in specific application, the heat management apparatus 20 may further include a controller. The controller may be connected to a driver in the multi-way valve 10, and is configured to control a rotation angle of the valve core by using the driver, to implement connection or disconnection between different interfaces, and finally implement circulation of the coolant between the different heat circulation pipelines. In addition, in actual application, a quantity of circulation pipelines included in the heat management apparatus 20 may be flexibly increased or decreased according to an actual requirement. A type of component and a quantity of components included in each heat circulation pipeline may also be flexibly selected and adjusted according to an actual requirement. This is not limited in this application.

It may be understood that, in actual application, the heat management apparatus 20 may further include components such as a temperature sensor and a humidity sensor. In addition, the heat management apparatus 20 may alternatively be equipped with a plurality of multi-way valves 10. Details about the heat management apparatus are not described herein.

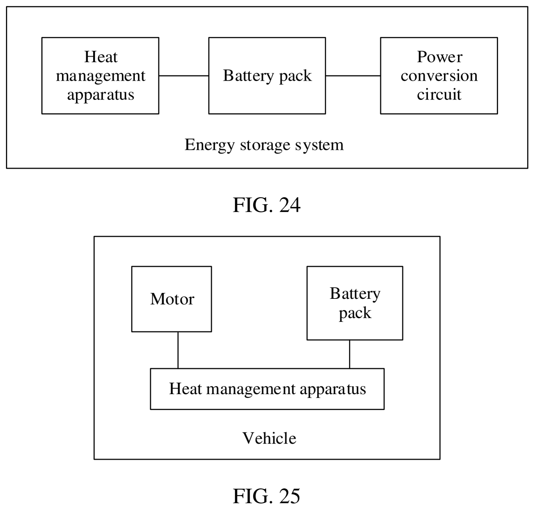

As shown in FIG. 24, in actual application, the heat management apparatus 20 may be used in an energy storage device. The energy storage device may include a battery pack, a power conversion circuit, and the foregoing heat management apparatus 20. The power conversion circuit is connected to the battery pack, and is configured to: convert an alternating current into a direct current and provide the direct current to the battery pack, or convert a direct current from the battery pack into an alternating current.

Refer to FIG. 23 and FIG. 24. The cold plate 211 in the heat management apparatus 20 may be in heat-conducting contact with the battery pack. The heat exchanger may heat or cool the battery pack by applying the foregoing heat management apparatus 20, so that the battery pack is in a normal temperature range. This can effectively improve charging and discharging efficiency and safety of the battery pack.

In addition, as shown in FIG. 25, the heat management apparatus 20 may alternatively be used in a vehicle. The vehicle may include components such as a battery pack and a motor. The heat management apparatus 20 is in heat-conducting connection with the battery pack and the motor, and is configured to effectively adjust and control temperatures of the battery pack and the motor.

Refer to FIG. 23 and FIG. 25. The cold plate 211 in the heat management apparatus 20 may be in heat-conducting contact with the battery pack. The evaporator 244 may be in heat-conducting contact with the motor. The battery pack and the motor may be heated or cooled by equipping with the foregoing heat management apparatus 20, so that running reliability of the components such as the battery pack and the motor can be effectively ensured. In addition, deployment of the heat management apparatus is flexible. In addition, in actual application, the evaporator 244 or the condenser 242 may also provide cooling capacity or heat for a passenger compartment in the vehicle, to improve ride comfort of the passenger.

In another example, the heat management apparatus 20 may alternatively be used in an energy storage cabinet, and is configured to adjust and control a temperature of the energy storage cabinet, or may implement a function such as dehumidification. Specific application scenarios of the multi-way valve 10 and the heat management apparatus 20 are not limited in this application.

In embodiments of this application, if there are no special statements and logic conflicts, terms and/or descriptions between different embodiments are consistent and may be mutually referenced, and technical features in different embodiments may be combined based on an internal logical relationship thereof, to form a new embodiment.

"A plurality of" in this application means two or more. "And/or" describes an association relationship between associated objects and represents that three relationships may exist. For example, A and/or B may represent the following cases: Only A exists, both A and B exist, and only B exists. A and B may be singular or plural.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

## Claims

1. A multi-way valve, comprising:
a housing, configured to accommodate at least two valve cores;
the at least two valve cores, wherein each valve core is configured to rotate relative to the housing, and the at least two valve cores are sequentially disposed in an axial direction; and
a driver assembly, disposed on an outer side of the housing, wherein the driver assembly is configured to drive, by using a transmission assembly, each valve core to rotate.

2. The multi-way valve according to claim 1, wherein the at least two valve cores comprise a first valve core and a second valve core;
the driver assembly comprises a first driver and a second driver;
the transmission assembly comprises a first shaft body and a second shaft body, and a shaft center of the first shaft body coincides with a shaft center of the second shaft body; and
the first shaft body is connected to the first driver and the first valve core, and the second shaft body is connected to the second driver and the second valve core.

3. The multi-way valve according to claim 2, wherein the first shaft body has a first end connected to the first driver, and the second shaft body has a second end connected to the second driver; and
the first end of the first shaft body and the second end of the second shaft body are sequentially disposed in the axial direction.

4. The multi-way valve according to any one of claims 1 to 3, wherein the at least two valve cores comprise a third valve core and a fourth valve core;
the driver assembly comprises a third driver, and the third driver has an output shaft;
the transmission assembly comprises a third shaft body and a fourth shaft body, a shaft center of the third shaft body coincides with a shaft center of the fourth shaft body, the third shaft body is connected to the third valve core, and the fourth shaft body is connected to the fourth valve core;
the transmission assembly further comprises a first one-way transmission member and a second one-way transmission member, the first one-way transmission member is connected to the output shaft and the third shaft body, and the second one-way transmission member is connected to the output shaft and the fourth shaft body; and
when rotating in a first rotation direction, the output shaft causes the first one-way transmission member to drive the third shaft body and the third valve core to rotate; when rotating in a second rotation direction, the output shaft causes the second one-way transmission member to drive the fourth shaft body and the fourth valve core to rotate; and a rotation direction of the first rotation direction is opposite to a rotation direction of the second rotation direction.

5. The multi-way valve according to any one of claims 1 to 3, wherein the at least two valve cores comprise a third valve core and a fourth valve core;
the driver assembly comprises a third driver;
the transmission assembly comprises a third shaft body, and the third shaft body is connected to the third driver;
the transmission assembly further comprises a first one-way transmission member and a second one-way transmission member, the first one-way transmission member is connected to the third valve core and the third shaft body, and the second one-way transmission member is connected to the fourth valve core and the third shaft body; and
when rotating in a first rotation direction, the third shaft body causes the first one-way transmission member to drive the third valve core to rotate; when rotating in a second rotation direction, the third shaft body causes the second one-way transmission member to drive the fourth valve core to rotate; and a rotation direction of the first rotation direction is opposite to a rotation direction of the second rotation direction.

6. The multi-way valve according to any one of claims 1 to 5, wherein in the two adjacent valve cores, each valve core is provided with an opening towards the other valve core, and two openings communicate when the two adjacent valve cores are at a first relative angle.

7. The multi-way valve according to any one of claims 1 to 6, wherein at least one of the valve cores comprises at least two flow channels, and the at least two flow channels are spaced apart in the axial direction.

8. The multi-way valve according to any one of claims 1 to 7, wherein the housing comprises a cavity and a plurality of interfaces, the cavity is configured to accommodate the at least two valve cores, the plurality of interfaces are configured to separately communicate with the cavity, and the plurality of interfaces are sequentially disposed in the axial direction.

9. A heat management apparatus, comprising a controller, a plurality of heat exchangers, and the at least one multi-way valve according to any one of claims 1 to 8, wherein the controller is connected to the driver assembly in the multi-way valve, the controller is configured to control a rotation angle of the valve core by using the driver assembly, and the at least one multi-way valve is configured to connect to or disconnect from a path between the at least two heat exchangers.

10. The heat management apparatus according to claim 9, wherein the heat management apparatus comprises a heat pump apparatus and a radiator, the plurality of heat exchangers comprise an evaporator and a condenser, the heat pump apparatus comprises a compressor, a condenser, a throttle valve, and an evaporator that sequentially communicate through a circulation pipeline, and the at least one multi-way valve is configured to:
connect to or disconnect from a path between the condenser and the radiator; and/or
connect to or disconnect from a path between the evaporator and the radiator.

11. The heat management apparatus according to claim 10, wherein the plurality of heat exchangers comprise a cold plate, and the at least one multi-way valve is configured to connect to or disconnect from a path between the cold plate and the radiator.

12. The heat management apparatus according to claim 11, wherein the at least one multi-way valve is further configured to:
connect to or disconnect from a path between the cold plate and the condenser; and/or
connect to or disconnect from a path between the cold plate and the evaporator.

13. The heat management apparatus according to claim 11 or 12, wherein the condenser, the evaporator, the radiator, and the cold plate are all connected to the same multi-way valve.

14. An energy storage device, comprising a battery pack, a power conversion circuit, and the heat management apparatus according to any one of claims 9 to 13, wherein at least one of the plurality of heat exchangers is in heat-conducting contact with the battery pack; and
the power conversion circuit is electrically connected to the battery pack, and is configured to: convert an alternating current into a direct current and provide the direct current to the battery pack, or convert a direct current from the battery pack into an alternating current.

15. A vehicle, comprising a battery pack and a motor, and further comprising the heat management apparatus according to any one of claims 9 to 13, wherein at least one of the plurality of heat exchangers is in heat-conducting contact with the battery pack, and at least one of the plurality of heat exchangers is in heat-conducting contact with the motor.
